(19) Europäisches Patentamt
European Patent Office
Office européen des brevets

(11) EP 2 861 647 B1

(12) # EUROPÄISCHE PATENTSCHRIFT

(45) Veröffentlichungstag und Bekanntmachung des Hinweises auf die Patenterteilung:
**16.05.2018 Patentblatt 2018/20**

(21) Anmeldenummer: **13728737.1**

(22) Anmeldetag: **13.06.2013**

(51) Int Cl.:
***C08G 64/30*** *(2006.01)* ***B01D 3/10*** *(2006.01)*
***B01D 5/00*** *(2006.01)*

(86) Internationale Anmeldenummer:
**PCT/EP2013/062240**

(87) Internationale Veröffentlichungsnummer:
**WO 2013/189823 (27.12.2013 Gazette 2013/52)**

(54) **VERFAHREN UND ANLAGE ZUR HERSTELLUNG VON POLYCARBONAT**

METHOD AND PLANT FOR PRODUCING POLYCARBONATE

PROCÉDÉ ET INSTALLATION POUR LA PRODUCTION DE POLYCARBONATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2012 DE 102012105296**

(43) Veröffentlichungstag der Anmeldung:
**22.04.2015 Patentblatt 2015/17**

(73) Patentinhaber: **EPC Engineering & Technologies GmbH**
**99310 Arnstadt (DE)**

(72) Erfinder: **STRENG, Michael**
**63477 Maintal (DE)**

(74) Vertreter: **Kruspig, Volkmar**
**Meissner Bolte Patentanwälte**
**Rechtsanwälte Partnerschaft mbB**
**Geschwister-Scholl-Strasse 15**
**07545 Gera (DE)**

(56) Entgegenhaltungen:
**EP-A1- 1 657 272**
**DE-A1-102006 051 308**
**JP-A- 2008 239 650**
**US-A- 5 142 018**
**US-A1- 2006 094 856**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 861 647 B1

## Beschreibung

Die vorliegende Erfindung betrifft ein Verfahren und eine Anlage zur Herstellung von Polykarbonaten aus Bisphenolen und Diarylcarbonaten in einer Mehrstufenreaktion.

Polykarbonate sind polymere Ester der Kohlensäure mit Diolen. Aufgrund ihrer interessanten physikalischen Eigenschaften wie insbesondere niedriges Gewicht, gute Temperatur- und Schlagfestigkeit und ausgezeichneter optischer Eigenschaften werden Polycarbonate für viele Produkte aus dem Bereich der Hochtechnologie verwendet. Es besteht daher ein stetig wachsender Bedarf für qualitativ hochwertiges Polycarbonat.

Die Herstellung von Polycarbonat kann durch Polykondensation von Phosgen mit Diolen oder, unter Vermeidung des hochgradig toxischen Phosgens, durch Umesterungsreaktion von Kohlensäurediestern mit Bisphenolen erfolgen. Die Herstellung von Polycarbonaten durch Umesterungsreaktion von Kohlensäurediestern mit Bisphenolen erfolgt in der Regel nach einem Schmelzumesterungsverfahren.

Die Herstellung von Polycarbonaten nach dem genannten Schmelzumesterungsverfahren ist bekannt und beispielsweise beschrieben in "Schnell", Chemistry and Physics of Polycarbonats, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Müller, N. Nouvertne, BAYER AG, "Polycarbonates" in Encyclopedia of Polymere Science and Engineering, Vol. 11, Second Edition, 1988, Seiten 648-718 und schließlich in Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299.

Die bei der Herstellung von Polycarbonaten aus Bisphenolen und Diarylcarbonaten ablaufende Reaktion wird durch die folgende Gleichung wiedergegeben:

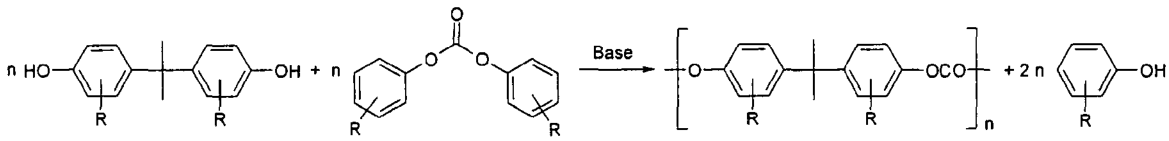


Wie aus der obenstehenden Gleichung ersichtlich wird, wird bei der Reaktion ein Hydroxyaryl-Reaktionsprodukt, wie beispielsweise Phenol, freigesetzt. Bei der Entfernung durch Destillation fällt das Phenol bei den bekannten Verfahren in stark verunreinigter Form an und kann nicht ohne vorherige Reinigung weiter verwendet werden. Somit besteht nicht die Möglichkeit, das Phenol ohne zwischengeschaltete Aufreinigungsschritte zur Herstellung von neuem Diarylcarbonat zur Wiedereinspeisung in das Verfahren zu verwenden.

Bei den im Stand der Technik beschriebenen Anlagen zur Herstellung von Polycarbonaten durch Schmelzumesterungsverfahren liegt ein wesentliches Problem in der Notwendigkeit manueller Eingriffe, wie z.B. zur Reinigung von Kondensationseinheiten oder Wärmetauschern, beispielsweise von oligomeren Reaktionsprodukten aus den Bisphenolen und Diarylcarbonaten. Diese Notwendigkeit zu manuellen Eingriffen führt zu hohen Betriebsstillstandszeiten mit entsprechenden wirtschaftlichen Nachteilen. Gleichzeitig bedingt die Notwendigkeit manueller Eingriffe auch eine Gefährdung des Betriebspersonals der Anlage. So wird bei dem üblicherweise als Diarylcarbonat-Komponente eingesetzten Diphenolcarbonat (DPC) Phenol als Reaktionsprodukt der freigesetzt. Aufgrund der hohen Toxizität und Aggressivität des Phenols stellt jeder manuelle Eingriff auch eine potentielle Gefährdung des Betriebspersonals dar.

Ein wichtiges Qualitätsmerkmal von Polycarbonaten ist die möglichst weitgehende Abwesenheit von Verfärbungen. Dies ist insbesondere bei der Verwendung von Polycarbonaten für Fensterscheiben, Autoscheinwerfern und optischen Einrichtungen von großer Bedeutung. In dem aus dem Stand der Technik bekannten Anlagen zur Herstellung von Polycarbonat treten immer wieder Probleme in Bezug auf leichte Verfärbungen des Polycarbonatproduktes, insbesondere in Form von gelblichen Verfärbungen, auf.

Vor diesem Hintergrund lag der vorliegenden Erfindung die Aufgabe zu Grunde, ein Verfahren und eine Anlage zur Herstellung von Polycarbonaten bereitzustellen, die die oben geschilderten Nachteile vermeiden.

Insbesondere lag der vorliegenden Erfindung die Aufgabe zu Grunde, ein Verfahren und eine Anlage zur Herstellung von Polycarbonat bereitzustellen, die die Herstellung von qualitativ hochwertigem Polycarbonat ermöglichen, bei denen möglichst geschlossene Stoffkreisläufe vorliegen, bei denen die Wirtschaftlichkeit durch minimierte Betriebsstillstandszeiten verbessert ist und bei denen die Notwendigkeit manueller Eingriffe in den Verfahrensablauf auf ein Minimum reduziert ist.

Die erfindungsgemäße Aufgabe wird durch ein Verfahren gemäß Anspruch 1 gelöst. Bevorzugte Ausführungsformen sind in den Ansprüchen 2 bis 9 wiedergegeben.

Bei dem erfindungsgemäßen Verfahren wird das Polycarbonat aus den Ausgangssubstanzen Bisphenol und Diarylcarbonat durch drei Reaktionsstufen hergestellt, nämlich durch eine Umesterungsreaktion, eine Prä-Polykondensation und eine Polykondensationsreaktion.

Vorzugsweise handelt es sich bei dem Bisphenol Dihydroxydiarylalkane der Formel HO-Z-OH, wobei Z ein divalenter organischer Rest mit 6 bis 30 Kohlenstoffatomen ist, der eine oder mehrere aromatische Gruppen enthält. Bei dem Diarylcarbonat handelt es sich vorzugsweise um Di-($C_6$ bis $C_{14}$-Aryl)-Kohlensäureester.

In einer bevorzugten Ausführungsform handelt es sich bei dem eingesetzten Bisphenol um Bisphenol A und bei dem eingesetzten Diarylcarbonat um Diphenylcarbonat. In diesem Fall handelt es sich bei dem abgespaltenen Hydroxyaryl-Reaktionsprodukt um Phenol.

Die Umesterungsreaktion wird am Beispiel der Reaktion von Bisphenol A mit Diphenylcarbonat durch die folgende Formel beschrieben:

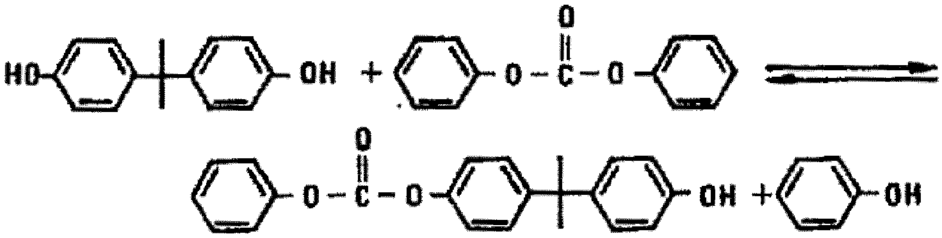

Die Umesterungsreaktion läuft in einem oder mehreren kontinuierlich gerührten Umesterungsreaktoren ab, die typischerweise mit innenliegenden Heizschlangen und mit einem Mantelbeheizung versehen sind. Die Umesterungsreaktion gemäß dem erfindungsgemäßen Verfahren läuft in drei hintereinandergeschalteten Umesterungsreaktoren ab. Die Umesterungsreaktion wird durch eine Reihe von Parametern beeinflusst.

Die wichtigsten Parameter sind:

- Temperatur
- Druck
- Durchlaufzeit
- Molares Verhältnis von Bisphenol und Diarylcarbonat
- Eingesetztes Katalysatorsystem.

Wie aus der obigen Reaktionsgleichung ersichtlich, wird während der Umesterungsreaktion Phenol freigesetzt. Aufgrund der vorliegenden Temperaturen und des vorliegenden Vakuums geht das Phenol in die Dampfphase über und wird kontinuierlich aus dem Reaktionsgemisch entfernt.

Die Polykondensationsreaktion, die während der Verfahrensschritte Prä-Polykondensation und Polykondensation abläuft, wird am Beispiel der Reaktion von Bisphenyl A mit Diphenylcarbonat durch das folgende Reaktionsschema wiedergegeben:

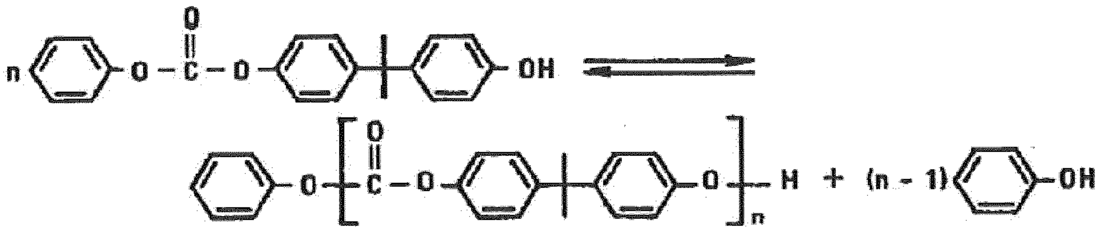

Die Polykondensationsreaktion wird durch eine Reihe von Parametern beeinflusst. Die wichtigsten Parameter sind:

- Reaktive Oberfläche
- Temperatur
- Druck
- Eingesetztes Katalysatorsystem

Im Gegensatz zur Umesterungsreaktion spielt die Durchlaufzeit bei der Polykondensation keine große Rolle. Der wichtigste Parameter zur Beeinflussung der Polykondensationsreaktion ist die reaktive Oberfläche.

Nach dem erfindungsgemäßen Verfahren läuft die Polykondensationsreaktion in einem dreistufigen Prozess ab:

- Prä-Polykondensationsstufe I (in einem ersten Prä-Polykondensationsreaktor)
- Prä-Polykondensationsstufe II (in einem zweiten Prä-Polykondensationsreaktor)
- Abschließende Polykondensationsstufe (in einem Polykondensationsreaktor (Finisher))

Dabei laufen während der Polykondensationsreaktion im Wesentlichen zwei Reaktionen ab:
Die Polykondensation unter Bildung von Polymerketten setzt sich fort, wobei bereits gebildete Polymerketten untereinander unter Bildung von längeren Polymerketten reagieren. Parallel zu dieser Kettenverlängerungsreaktion kommt es zu Kettenabbruchsreaktionen, die das Wachstum der Kettenlänge stoppen.
Zum Kettenabbruch kommt es am Beispiel der Reaktion von Bisphenol A mit Diphenylcarbonat durch das folgende Reaktionsschema:

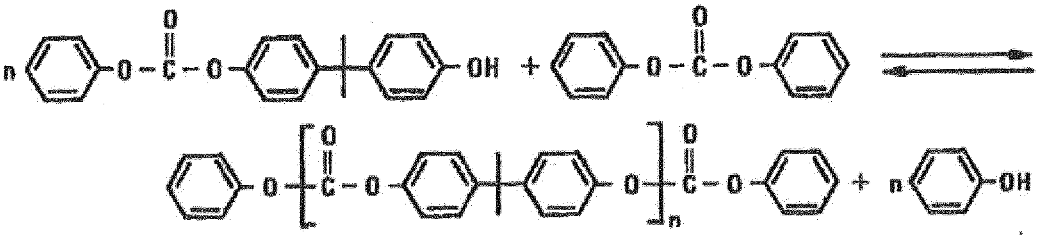

Aufgrund der Kettenverlängerungsreaktion wird weiteres Phenol abgespalten, das unter Verwendung eines Vakuums aus der Reaktion entfernt wird.
In den aus dem Stand der Technik bekannten Verfahren wird das Phenol-Reaktionsprodukt als Spaltphenol destillativ abgetrennt und fällt in Reinheiten von etwa 60% an. Eine der verunreinigenden Beimischungen ist dabei das Diphenylcarbonat, das unter den Bedingungen, unter denen das Spaltphenol abgezogen wird, in signifikanten Mengen in die Gasphase übergeht. Das so stark verunreinigte Spaltphenol kann daher nicht ohne weitere Aufreinigungsschritte weiter verwendet werden.
Es hat sich überraschend gezeigt, dass durch den erfindungsgemäßen Einsatz einer Kolonne bei der Abtrennung des Spaltphenols während der Umesterungsreaktion das Phenol in Reinheiten von ≥ 95% erhalten werden kann. Insbesondere wird auch das mitgerissene Diphenylcarbonat durch den Einsatz der Kolonne nahezu vollständig vom Phenol getrennt und fällt somit ebenfalls in so hohen Reinheiten an, dass es in den Prozess rückgeführt werden kann.
Vorteilhafterweise wird bei der Durchführung des erfindungsgemäßen Verfahrens ein Katalysator eingesetzt. Die Verwendung von Katalysatoren bei der Herstellung von Polycarbonaten aus Bisphenolen und Diarylcarbonaten nach einem Schmelzumesterungsverfahren ist bekannt. Im Rahmen der vorliegenden Erfindung wurde gefunden, dass überraschend gute Ergebnisse durch Einsatz eines neuen Katalysators in Form einer Mischung aus mindestens einem Alkalimetallsalz eines aromatischen Alkohols und mindestens einem Borsäureester eines aromatischen Alkohols erzielt werden. Besonders bevorzugt im Rahmen eines erfindungsgemäßen Verfahrens ist ein Katalysator in Form einer Mischung aus Alkalimetallphenolat und ein Borsäureester eines aromatischen Alkohols.
Besonders gute Ergebnisse werden erzielt, wenn als Katalysator eine Mischung aus 0.1 bis 2 ppm Alkalimetallphenolat und 0.25 bis 3ppm Borsäureester eines aromatischen Alkohols zugesetzt werden.
Einer der wesentlichen Parameter, die die Eigenschaften eines Polycarbonates charakterisieren, ist das OH/Arylcarbonat-Endgruppenverhältnis. Dieses Verhältnis ist wie folgt definiert:

$$\text{OH/Arylcarbonat-Endgruppenverhältnis} = \frac{\textit{Zahl der OH} - \textit{Endgruppen}}{\textit{Gesamtzahl der Endgruppen}}$$

Die Bestimmung des OH/Arylcarbonat-Endgruppenverhältnisses kann beispielsweise durch getrennte Bestimmung der OH-Endgruppen mittels photometrischer Bestimmung mit $TiCl_4$ einerseits sowie Ermittlung der Arylcarbonat-Endgruppen durch HPLC-Bestimmung des nach Totalverseifung gebildeten Monophenols andererseits ermittelt werden. Im Allgemeinen betragen die OH-Endgruppen und die Arylcarbonat-Endgruppen im Polycarbonat zusammen 100%.
Die Einstellung des gewünschten OH/Arylcarbonat-Endgruppenverhältnisses hängt von vielen Faktoren ab und wird durch geringe Schwankungen in der Ausgangsstöchiometrie der eingesetzten Bisphenole und Diarylcarbonate, vor allem aber auch durch Destillationsverluste des Diarylcarbonats bei der Abdestillation des Hydroxyaryl-Reaktionsproduktes stark beeinflusst.
Bei dem aus dem Stand der Technik bekannten Verfahren führt die möglichst vollständige Abtrennung des

Hydroxyaryl-Reaktionsproduktes (Spaltphenol) zu starken Verlusten des eingesetzten Diarylcarbonates, was zu einer unvorhersehbaren Verschiebung des OH/Arylcarbonat-Endgruppenverhältnisses führt.

Diese Problematik kann erfindungsgemäß dadurch gelöst werden, dass den Zwischenproduktströmen zwischen der Umesterungsreaktion und der Prä-Polykondensationsreaktion zur Einstellung des gewünschten OH-Arylcarbonat-Endgruppenverhältnisses weiteres Diarylcarbonat zugesetzt wird.

Da gemäß dem erfindungsgemäßen Verfahren das bei der Abtrennung des Hydroxyaryl-Reaktionsproduktes (Spaltphenol) mitgerissene Diarylcarbonat in hoher Reinheit anfällt, besteht ein besonderer Vorteil des erfindungsgemäßen Verfahrens in der Möglichkeit, dass so gewonnene Diarylcarbonat ohne Zwischenschritte unmittelbar in den Prozess einzuführen, indem das Arylcarbonat den Zwischenproduktströmen nach der Umesterungsreaktion erneut zudosiert wird.

Durch diese Wiederzuführung des vom Hydroxyaryl-Reaktionsprodukt (Spaltphenol) abgetrennten Diarylcarbonats kann insbesondere die ursprüngliche Stöchiometrie zwischen Diarylcarbonaten und Bisphenol wieder hergestellt werden, um das gewünschte OH/Arylcarbonat-Endgruppenverhältnis zu erzielen.

In der Praxis ist es nicht unbedingt erforderlich, vor der Zudosierung von Diarylcarbonat zwischen der Umesterungsreaktion und der Prä-Polykondensationsreaktion zur Einstellung des gewünschten OH/Arylcarbonat-Endgruppenverhältnisses eine Messung des OH/Arylcarbonat-Endgruppenverhältnisses vorzunehmen. In einer Ausführungsform des Verfahrens werden die Betriebsparameter des Verfahrens - bevorzugt in dem Verfahrensschritt der Umesterung - zur Erzielung eines mittleren Molekulargewichtes im fertigen polymeren Polycarbonat und einem zugehörigen, aus Erfahrungswerten bestimmten OH/Arylcarbonat-Endgruppenverhältnis eingestellt. Anstelle einer konkreten Messung des OH/Arylcarbonat-Endgruppenverhältnisses kann also durch hinreichend genaue Kontrolle der Reaktionsbedingungen aus Erfahrungswerten auf das nach der Umesterungsreaktion vorliegende OH/Arylcarbonat-Endgruppenverhältnis geschlossen werden und die Zudosierung von weiterem Arylcarbonat dementsprechend gesteuert werden.

Das gewünschte mittlere Molekulargewicht der Oligomeren und Polygomeren kann durch on-line Viskosimetrie kontinuierlich ermittelt werden.

Die Zudosierung von weiterem Diarylcarbonat zu den Zwischenproduktströmen zwischen der Umesterungsreaktion und der Prä-Polykondensationsreaktion kann aber auch unabhängig von der ursprünglich eingestellten Stöchiometrie zur Feineinstellung das OH/Arylcarbonat-Endgruppenverhältnisses genutzt werden.

Besonders vorteilhaft kann die Zudosierung von weiterem Diarylcarbonat zu den Zwischenproduktströmen zwischen der Umesterungsreaktion und der Prä-Polykondensationsreaktion in einer Ausführungsform des Verfahrens eingesetzt werden, bei der die BrüdenZwischenproduktströme nach der Umesterungsreaktion geteilt werden. Dies ermöglicht es, durch Zudosierung von weiterem Diarylcarbonat zu mindestens einem der geteilten Zwischenproduktströme Polycarbonate mit unterschiedlichen OH/Arylcarbonat-Endgruppenverhältnissen gleichzeitig herzustellen. Durch geeignete Einstellung der Stöchiometrie zwischen Diarylcarbonat und Bisphenol in der Ausgangsreaktionsmischung und entsprechendes Zudosieren von weiterem Diarylcarbonat zwischen der Umesterungsreaktion und der Prä-Polykondensationsreaktion in den geteilten Zwischenproduktströmen kann somit das OH/Arylcarbonat-Endgruppenverhältnis in einem sehr weiten Bereich variiert werden.

Im Falle von zwei oder mehr parallelen Polykondensationslinien hinter einem gemeinsamen vorgeschalteten Umesterungsreaktor kann in einer Ausführungsform für mindestens eine der parallelen Polykondensationslinien, wenn für diese Linie ein abweichendes mittleres Molekulargewicht im Endprodukt gewünscht ist, aus besagten Erfahrungswerten eine definierte Menge an Diarylcarbonat in Relation zu dem durch on-line Viskosimetrie ermittelten mittleren Molekulargewicht des Zwischenproduktes in einem Teilstrom in den Zwischenproduktstrom zudosiert und damit das erforderliche OH/Arylcarbonat-Endgruppenverhältnis im Endprodukt eingestellt werden.

Die vorliegende Erfindung betrifft auch eine Anlage zur Herstellung von Polycarbonat aus mindestens einem Bisphenol und mindestens einem Diarylcarbonat. Die erfindungsgemäße Anlage dient vorzugsweise zur Durchführung des im vorhergehenden Teil beschriebenen Verfahrens.

Die erfindungsgemäße Anlage zur Herstellung eines Polycarbonates weist mindestens Folgendes auf:

a) drei Umesterungsreaktoren zur Aufnahme einer Reaktionsmischung, die mindestens ein Bisphenol und mindestens ein Diarylcarbonat umfasst, und zur Herstellung eines umgeesterten Zwischenproduktes,

b) zwei Prä-Polykondensationsreaktoren zur Herstellung eines Prä-Polykondensations-Zwischenproduktes aus dem umgeesterten Zwischenprodukt,

c) einen Polykondensationsreaktor (Finisher) zur Herstellung eines Polycarbonates aus dem Prä-Polykondensationszwischenprodukt,

wobei die Umesterungsreaktoren Mittel zum Entfernen des bei der Umesterungsreaktion abgespaltenen Hydroxyaryl-Reaktionsproduktes aufweist, die mindestens eine Kolonne umfassen.

Bevorzugte Ausführungsform der erfindungsgemäßen Anlage sind in den Ansprüchen 11 bis 19 wiedergegeben. Typischerweise dient die erfindungsgemäße Anlage zur Herstellung von Polycarbonaten aus Bisphenol A und Diphenylcarbonat als Rohmaterialien. Die erfindungsgemäße Anlage umfasst drei Umesterungsreaktoren (Umesterungsreaktoren I bis III), zwei Präpolykondensationsreaktoren (Präpolykondensationsreaktoren I und II) und einen Polykondensationsreaktor (Finisher).

Der Verfahrensablauf zur Herstellung eines Polycarbonates aus den Ausgangsverbindungen Bisphenol A (BPA) und Diphenylcarbonat (DPC) in einer solchen Anlage wird im Folgenden beschrieben:

In den Umesterungsreaktoren I bis III läuft die Reaktion der Ausgangsmaterialien BPA und DPC bei vermindertem Druck und erhöhter Temperatur ab und führt zu einem umgeesterten Monomer bei hoher Umsetzungsrate (typischerweise über 99,2%).

Bei den Umesterungsreaktoren I bis III handelt es sich um vertikalgerührte Reaktoren mit internen Heizspiralen und zusätzlichem Heizmantel an der Außenseite.

Im Umesterungsreaktor I läuft die Reaktion bei vermindertem Druck (etwa 250 bis 500, insbesondere etwa 300 bis 400 mbar) und bei einer Temperatur von etwa 180 bis 210°C ab.

Im Umesterungsreaktor II läuft die Reaktion bei weiter vermindertem Druck (etwa 150 bis 300, insbesondere etwa 200 mbar) und bei einer Temperatur von etwa 200 bis 220°C ab.

Im Umesterungsreaktor III läuft die Reaktion bei noch stärker vermindertem Druck (etwa 50 bis 150 mbar, insbesondere etwa 100 mbar) und bei einer Temperatur von etwa 210 bis 230°C ab.

Der Materialfluss zwischen den Umesterungsreaktoren I bis III wird einerseits gravimetrisch aufgrund der Kaskadierung der Reaktoren und andererseits aufgrund der Druckdifferenz zwischen den Umesterungsreaktoren I bis III aufrechterhalten.

Das bei der Reaktion abgespaltene Phenol wird zusammen mit dem mitgerissenen DPC der Kolonne zugeführt, wodurch Phenol und DPC jeweils in Reinheiten von größer 95% rückgewonnen werden.

Im Präpolykondensationsreaktor I erfolgt die Umsetzung des umgeesterten Monomers aus der Umesterungsstufe in Polymerketten einer gewissen Kettenlänge (durchschnittliche Kettenlänge ungefähr n=20).

Die Reaktion läuft unter einem Vakuum von etwa 10 bis 20 mbar, insbesondere etwa 15 mbar, und einer Temperatur von etwa 235 bis 255°C ab.

Bei der Präpolykondensationsreaktion freigesetztes Phenol und DPC, sowie mitgerissenes Oligomer, werden vorzugsweise in einem Doppelkondensator abgeschieden.

Vom Präpolykondensationsreaktor I gelangt die Reaktionsmasse in den Präpolykondensationsreaktor II, in dem eine Kettenlängenverlängerung auf eine Kettenlänge von n = etwa 70 bis 80 erfolgt. Präpolykondensationsreaktion im Präpolykondensationsreaktor II läuft unter einem Vakuum von etwa 2,5 bis 7,5 mbar, insbesondere etwa 5 mbar, und einer Temperatur von etwa 270 bis 290°C ab.

Die endgültige Polykondensation erfolgt im Polykondensationsreaktor (Finisher) auf eine Kettenlänge von üblicherweise n = etwa 120 bis 200, insbesondere etwa 160 (bzw. ein Molekulargewicht $M_w$= etwa 31.000 kg/kmol).

Die Reaktion im Polykondensationsreaktor läuft unter einem Vakuum von etwa 0,25 bis 1,25 mbar, insbesondere etwa 0,5 bis 0,8 mbar, und bei einer Temperatur von etwa 290 bis 320°C ab.

In einer bevorzugten Ausführungsform weist die erfindungsgemäße Anlage getrennte Aufschmelzgefäße für Bisphenol A und Diarylcarbonat auf, in denen die Rohmaterialien geschmolzen und anschließend zum Entfernen von festen Verunreinigungen filtriert werden. Zur Erhöhung der Reinheit der eingesetzten Monomere weist die erfindungsgemäße Anlage vorzugsweise Mittel zur Umkristallisation der monomeren Bestandteile Bisphenol und Diarylcarbonat auf.

Die in flüssiger Phase vorliegenden Rohmaterialien werden durch Wärmetauscher vorerwärmt und im gewünschten molaren Verhältnis in den Umesterungsreaktor gepumpt, wo sie vorzugsweise mit einem geeigneten Katalysatorsystem gemischt werden und auf die Umesterungstemperatur erhitzt werden. Während der Umesterungsreaktion wird das Hydroxyarylreaktionsprodukt (Spaltphenol) freigesetzt. Die bei der Umesterungsreaktion gebildeten kurzen Polymerketten (Oligomere) treten aus dem Umesterungsreaktor aus und der nächste Reaktionsschritt findet in dem Prä-Polykondensationsreaktor I statt. Unter Verwendung von höheren Temperaturen und stärker vermindertem Druck bilden sich Polymerketten mittlerer Kettenlänge aus. Nach dem Prä-Polykondensationsschritt I wird das gebildete Zwischenprodukt zunächst in den Prä-Polykondensationsreaktor II und anschließend in den Polykondensationsreaktor (Finisher) transferiert. Der Prä-Polykondensationsreaktor II und der Polykondensationsreaktor (Finisher) sind als horizontale Ringscheibenreaktoren ausgeführt, um die erforderliche hohe Oberfläche zu ermöglichen.

Die Anlage umfasst alle notwendigen Mittel, wie insbesondere Mittel zur Zirkulation des Heizmediums, Mittel zur Erzeugung eines Vakuums, Mittel zur Erzeugung von Pellets oder Chips aus dem Polycarbonatprodukt und Mittel zum Verpacken des Endproduktes.

Fig. 1 zeigt eine schematische Darstellung einer Ausführungsform einer erfindungsgemäßen Anlage in Form eines Blockdiagramms:

(1) BPA - Rohstoffschmelze

(2) DPC - Rohstoffschmelze
(3) BPA - gereinigt
(4) DPC - gereinigt
(5) Rohstoffschmelzgemisch
(6) UE 1 - Schmelze v. Produkt
(7) UE 1 - Phenol / DPC Brüden
(8) UE 2 - Schmelze v. Produkt
(9) UE 2 - Phenol / DPC Brüden
(10) UE 3 - Schmelze v. Produkt
(11) UE 3 - Phenol/DPC Brüden
(12) PP1 - Präpolykondensatprodukt
(13) PP1 - Phenol / DPC Brüden
(14) PP1 - Kondensat (Spalt-Phenol / DPC)
(15) PP2 - Präpolykondensatprodukt
(16) PP2 - Phenol / DPC Brüden
(17) Finisher - Präpolykondensatprodukt
(18) Finisher - Phenol /DPC Brüden
(19) Finisher - Polykarbonatschmelze
(20) Spalt-Phenol Rezirkulation
(21) Phenol Destillat Austrag
(22)Spalt-DPC Rezirkulation
(23) Spalt-DPC Austrag
(24) Spalt-Phenol Rezirkulation für Katalysator
(25) Katalysator Phenol
(26) Spalt-DPC Rezirkulation
(27)Spalt-DPC z. Vorreinigung
(28) PP1 - Doppelkondensator
(29) PP2 - Doppelkondensator
(30) Finisher - Doppelkondensator
(31) Endprodukt PC Granulat

BPA-Schmelze (1) und DPC-Schmelze (2) werden einer Rohstoffreinigung zugeführt. Die Reinigung von DPC erfolgt destillativ, die Reinigung von BPA erfolgt gemäss dem Stand der Technik.

Die gereinigte BPA-Schmelze ((3) und DPC-Schmelze (4) wird in einem bevorzugten molaren Verhältnis von 1,0 - 1,2 mol DPC/1 mol BPA kontinuierlich oder diskontinuierlich gemischt, was in einem Temperaturbereich von 130-180°C eine Stabilisierung der BPA-Schmelze gegen Degredation erreicht.

Die BPA-DPC Eduktschmelze (5) wird kontinuierlich der ersten Umesterungsstufe UE1 zugeführt.

Die für die Reaktion benötigte Katalysatormenge wird ebenfalls in gelöster Form in einer Trägerflüssigkeit bzw. einem Lösemittel bevorzugt Phenol dem Polykondensationsprozess zudosiert (25).

Die Reaktion der Umesterung findet bevorzugt in drei Sektionen statt UE1-UE2-UE3. Die erzielte Umesterungsproduktschmelze enthält entsprechend dem Reaktionsfortschritt mehr und mehr umgeesterte Monomereinheiten (6)-(8)-(10).
Die dabei frei werdenden Mengen an Phenol als Reaktionsprodukt der UE-Stufen wird als Brüdenstrom (7)-(9)-(11) der integrierten Vakuumkolonne zugeführt.

Die Reaktion der Präpolykondensation findet bevorzugt in zwei Sektionen statt PP1-PP2. Die fortschreitende Restumesterung und vor allem der erzielte Polykondensationsgrad enthält entsprechend dem Reaktionsfortschritt mehr und mehr längerkettige Polymereinheiten (12)-(15). Die finale Reaktion der Polykondensation findet bevorzugt in der Sektion FIN statt. Der erzielte finale Polykondensationsgrad enthält entsprechend dem einstellbaren Reaktionsfortschritt die gewünschte polymere Kettenlänge (17).

Die dabei frei werdenden Mengen an Phenol und DPC als Reaktionsprodukte der Prä- und finalen Polykondensationsstufen wird als Brüdenstrom (13)-(16)-(18) dem Doppelkondensationssystem 28)-(29)-(30) zugeführt.

Die somit erzeugten Mischkondensate als Spaltprodukte der Reaktion vorzugsweise bestehend aus Phenol und mehrheitlichen Anteilen von DPC werden als Spalt-DPC kontinuierlich ausgetragen und können partiell der Umesterungssektion rückgeführt werden (22), (26) und/oder der Rohstoffaufarbeitung wieder zugeführt werden (27) oder die Anlage verlassen (23).

Die Nicht-kondensierbaren Anteile der Polykondensationsbrüden vorzugsweise Spalt-Phenol wird in der Vakuumerzeugungseinheit durch Kompression und gezielte Temperierung kondensiert und der Kolonne wieder rückgeführt (14)-(20).

Das erzeugte und durch die Kolonne unter Vakuum destillativ gereinigte Spalt-Phenol wird die Anlage verlassen (21) und kann beispielsweise zur Rohstoffherstellung wieder rückgeführt werden.

Ein Teilstrom des gereinigten Spalt-Phenol (24) wird zur Präparation des Katalysatorgemisches intern rezykliert.

Die Polymerschmelze wird kontinuierlich filtriert (19) und der Granulierungseinheit zugeführt.

Die Granuliereinheit, bevorzugterweise Stranggranulierung, produziert die finalen PC Granulate (31).

Fig. 2 zeigt eine schematische Darstellung eines Umesterungsreaktors der erfindungsgemäßen Anlage:

(1) Vorprodukt oder Rohstoffgemisch Eintritt
(2) Umesterungsprodukt Austritt
(3) Reaktionsbrüden
(4) HTM Heizmedium Eintritt Heizschlange
(5) HTM Heizmedium Austritt Heizschlange
(6) HTM Reaktor-Mantelbeheizung Vorlauf
(7) HTM Reaktor-Mantelbeheizung Rücklauf
(8) HTM Produktleitung-Mantelbeheizung
(9) HTM Produktleitung-Mantelbeheizung

Das Vorprodukt oder Rohstoffgemisch (9) tritt kontinuierlich und geregelt dem Reaktor ein. Das Umesterungsprodukt tritt als Schmelze kontinuierlich aus (2) und die Reaktionsbrüden verlassen den Reaktorbehälter (3) hin zur Kolonne (Fig. 3), wenn erforderlich via einem Brüdenregelventil was gleichzeitig die Reaktionsdrücke regelt.

Der gerührte Reaktionsbehälter wird durch einen Wärmeträger (HTM) beheizt. Die erforderliche thermische Prozesswärme wird via definierter HTM Durchflussmenge einer internen Heizschlange zugeführt (4) und nach Wärmeabgabe abgeführt (5). Der Reaktorbehälter wird durch eine HTM-Versorgung in und durch den Reaktormantel beheizt somit aktiv isoliert (6)-(7), die HTM- Beheizung kann vorzugsweise in mehrere Abschnitte unterteilt sein.

Fig. 3 zeigt eine schematische Darstellung einer Kolonne zur Trennung von Phenol und DPC in der erfindungsgemäßen Anlage:

(1) Brüdeneintritt UE1
(2) Brüdeneintritt UE2
(3) Brüdeneintritt UE3
(4) Umesterungskolonne mit Packungen
(5) Spalt-Phenol aus PP1 und PP2 / Finisher Vakuumsystem
(6) Sammelbehälter Spalt-Phenol
(7) Vakuumentlüftung
(8) Brüdenphenolaustritt
(9) Rückflussbehälter Phenoldestillat
(10) Rückfluss
(11) Phenoldestillat Produkt
(12)Spalt-DPC Rezirkulation zur UE1
(13) Spalt-DPC Austrag
(14) Spalt-DPC interne Zirkulation / Austausch
(15) HTM Wärmeträger Zufuhr

Die Umesterungsbrüdenströme (1)-(2)-(3) treten in die Prozesskolonne kontinuierlich ein. Die Umesterungskolonne (4) wird unter Vakuum betrieben, die effektive Destillation wird vorzugsweise durch ein Trennkörper-Packungssystem ermöglicht. Spalt-Phenol als Kondensat der PP1 und Kondensat der Vakuumsysteme der PP1-PP2 und Finisher (5) wird einem Spalt-Phenol Sammelbehälter (6) zugeführt und in die Prozesskolonne zur Aufreinigung rezykliert. Die Phenol- und DPC-Anteile der UE-Brüdenströme (1)-(2-(3) und des Spalt-Phenol (5) werden hocheffektiv aufgetrennt: Phenol als Kopfprodukt (8) wird kondensiert und als hochgereinigtes Phenol-Destillat aus dem Rückflussbehälter (9) zum einen Teil als definierter Rückfluss der Kolonne zugeführt (10) und als Destillat (11) zur Wiederverwertung ausgeschieden.

DPC als Sumpfprodukt wird vorzugsweise der Umesterungsstufe 1 (UE1) direkt rückgeführt (12) was die Effizienz der Rohstoffverbräuche steigert oder aus der Anlage zur Wiederverwertung ausgeschieden (13).

Ein definierter DPC-Strom wird rezykliert (14) zwecks Austausch des Kolonnensumpfes. HTM wird als Wärmeträger zur Erbringung der benötigten thermischen Destillationsenergie geregelt zugeführt (15).

Das angewendete integrierte Trennverfahren erzielt somit eine hohe Reinheit der Spalt DPC-Schmelze und des Spalt-Phenols was die direkte Wiederverwertung dieser Spaltprodukte ermöglicht.

Fig. 4 zeigt eine schematische Darstellung eines Präpolykondensationsreaktors I einer erfindungsgemäßen

Anlage:

(1) Vorprodukt oder Rohstoffgemisch Eintritt
(2) Umesterungsprodukt Austritt
(3) Reaktionsbrüden
(4) HTM Heizmedium Eintritt Heizschlange
(5) HTM Heizmedium Austritt Heizschlange
(6) HTM-Reaktor-Mantelbeheizung Vorlauf
(7) HTM-Reaktor-Mantelbeheizung Rücklauf
(8) HTM Produktleitung-Mantelbeheizung
(9) HTM Produktleitung-Mantelbeheizung

Das Vorprodukt (9) tritt kontinuierlich und geregelt dem Reaktor ein. Das Präpolykondensat als Produkt tritt als Schmelze kontinuierlich aus (2) und die Reaktionsbrüden verlassen den Reaktorbehälter (3) hin zum Doppelkondensator (Fig. 5).

Der gerührte Reaktionsbehälter wird durch einen Wärmeträger (HTM) beheizt. Die erforderliche thermische Prozesswärme wird via definierter HTM Durchflussmenge einer internen Heizschlange zugeführt (4) und nach Wärmeabgabe abgeführt (5). Der Reaktorbehälter wird durch eine HTM-Versorgung in und durch den Reaktormantel beheizt somit aktiv isoliert (6)-(7), dieHTM- Beheizung kann vorzugsweise in mehrere Abschnitte unterteilt sein.

Fig. 5 zeigt eine schematische Darstellung eines Doppelkondensators (für Präpolykondensation 1, 2 und Polykondensationsreaktor (Finisher) der erfindungsgemäßen Anlage:

(1) Brüdeneintritt
(2) EPC Doppelkondensator (Section 1)
(3) Produktleitung
(4) EPC Doppelkondensator (Section 2)
(5) Brüdenaustritt
(6) Produktleitung
(7) Produktleitung
(8) Abtauchbehälter
(9) Abtauchbehälter
(10) Flüssigkeitskreislauf Pumpe
(11) Flüssigkeitskreislauf Pumpe
(12) Produktleitung
(13) Produktleitung
(14) Flüssigkeitskühler
(15) Sprühkondensateintritt
(16) Rückführung
(17) Produktleitung
(18) Austrag
(19) Beheizung der Produktleitung
(20) Beheizung der Produktleitung
(21) Beheizung der Section 1
(22) Beheizung der Produktleitung
(23) Beheizung der Produktleitung
(24) Beheizung des Abtauchbehälters
(25) Beheizung des Abtauchbehälters
(26) Beheizung der Produktleitung
(27) Beheizung der Produktleitung

Der Doppelkondensator besteht hauptsächlich aus zwei Sektionen (2)-(4).

Sektion 1 (2) dient vorzugsweise der Oligomerenabscheidung aus den Brüden, Sektion 2 (4) dient vorzugsweise der Kondensation der Brüden.

Die Reaktionsbrüden der Präpoly- und Polykondensation (1), die ausgeschiedene Oligomere der Reaktionsstufe beinhalten, treten in die erste Sektion des unter Vakuum betriebenen Doppelkondensators (2) ein. Die eintretende Brüdenleitung ist mit HTM thermisch mantelbeheizt (19).

In dieser ersten Sektion wird vorzugsweise der Gehalt an Oligomeren aus dem eintretenden Brüden (19) entzogen: Oligomere und polymere Schmelzeanteile strömen dem Kondensator zu und werden durch eine interne

Abkratzrühreinheit mechanisch vom Brüden getrennt.

Die Hauptmenge des Brüdenstromes (19) wird unkondensiert über eine Produktleitung (3) der zweiten Sektion des Doppelkondensators (4) zugeleitet. Die verbleibenden Nichtkondensierbaren Brüdenanteile vorzugsweise Spalt-Phenol, Leckluft und Inertgasanteile werden der Vakuumerzeugungseinheit über eine HTM-temperierte Mantelleitung (20) zugeführt (5).

Die austretenden Kondensate werden über Manteltemperierte Produktleitungen (6), (22) - (7), (23) den Abtauchbehältern (8)-(9) zugeführt. Die Kondensatorsektionen 1 und 2 sind vorzugsweise mehr als 10m oberhalb der Flüssigkeitsspiegel innerhalb der Abtauchbehälter aufgestellt, was die Funktion einer "barometrischen Abtauchung" erfüllt.

Das oligomerhaltige Kondensat der ersten Sektion (6) mit dem Anteil der rezirkulierten Hauptmenge des nicht-oligomerhaltigen Kondensates der zweiten Sektion (17) zirkuliert via Pumpe (10) und tritt der ersten Kondensatorsektion vorzugsweise von zwei Seiten wieder ein (12)-(13), was eine effiziente Ausspülung der verfestigten Oligomeranteile aus der ersten Sektion ermöglicht.

Die Kondensatrezirkulation von der zweiten in die erste Sektion (17) dient auch einer permanent benötigten Verdünnung der Zirkulationsflüssigkeit der Sektion 1.

Das Kondensat der zweiten Sektion (7) ist ein Sprühkondensator und bildet die Hauptmenge des gesamten Kondensates. Dieses zirkuliert via Pumpe (11) und tritt der zweiten Kondensatorsektion vorzugsweise via parallelen Sprühflüssigkeitsleitungen wieder ein (15), was eine effiziente Sprühkondensation durch interne Flüssigkeitsverteiler ermöglicht.

Die über die Brüdenkondensation eingetragene Kondensationswärme wird via Flüssigkeitswärmetauscher (14) absorbiert.

Die Abtauchbehälter und Flüssigkeitsleitungen werden durch einen speziellen Flüssigkeitswärmeträger HTM Manteltemperiert (22)-26), (23)-(27).Die verbleibende Überschusskondensatmenge wird geregelt aus dem ersten und zweiten Abtauchbehälter und Flüssigkeitzirkulationssystem ausgeschieden (16)-(18).Die Besonderheit dieses Doppelkondensatorsystems ist die hohe Verfügbarkeit.

Eine durch Oligomerenblockade temporär angehaltene Flüssigkeitszirkulation der Sektion 1 führt nicht zwangsweise zu einer Unterbrechung des gesamten Kondensationsprozesses. Die eigentliche Brüdenkondensation wird durch die Sektion 2 des Doppelkondensators permanent aufrechterhalten.

Fig. 6 zeigt eine bevorzugte Ausführungsform der erfindungsgemäßen Anlage als Ganzes:

| | |
|---|---|
| (1) | Bisphenol-A (BPA) Schmelzezuspeisung (gereinigt) |
| (2) | Diphenylcarbonat (DPC) Schmelzezuspeisung (ungereinigt) |
| (3) | Diphenylcarbonat (DPC) Schmelzezuspeisung (gereinigt nach EPC Destillationsverfahren) |
| (4) | DPC Vakuumkolonne |
| (5) | DPC Rückfluss- und Erzeugnisbehälter |
| (6) | DPC-BPA Rohstoffschmelzemischbehälter |
| (7) | Rohstoffschmelze Erhitzer |
| (8) | Umesterungsreaktionsstufe UE1 |
| (9) | Umesterungsreaktionsstufe UE2 |
| (10) | Umesterungsreaktionsstufe UE3 |
| (11) | Prozess-Vakuumkolonne (DPC/Phenoltrennung) |
| (12) | Phenol Rückfluss- und Erzeugnisbehälter |
| (13) | Vakuumpumpensystem Prozesskolonne |
| (14) | Austrag Phenoldestillat |
| (15) | Präpolykondensationsreaktor PP1 |
| (16) | Präpolykondensationsreaktor PP2 (Lochringscheibenreaktor-Prinzip) |
| (17) | Polykondensationsreaktor FINISHER (Ringscheibenreaktor-Prinzip) |
| (18) | PP2 Lochscheibenrührer Hydraulikantrieb |
| (19) | FINISHER Ringscheibenrührer Hydraulikantrieb |

(fortgesetzt)

| | |
|---|---|
| (20) | Präpolykondensat Vorerhitzer |
| (21) | Polykondensatschmelzefiltration |
| (22) | Polycarbonat PC Granulaterzeugung |
| (23) | Sammelbehälter Spalt-Phenol aus Polykondensationsreaktionsschritten und Vakuumanlagen zur Rezirkulation und Rückgewinnung des Spaltphenol und Abtrennung der DPC-Inhalte |
| (24) | Doppelkondensator PP1 |
| (25) | Vakuumpumpe PP1 |
| (26) | Doppelkondensator PP2 |
| (27) | Doppelkondensator FINISHER |
| (28) | Mehrstufenvakuumanlage für PP2 und FINISHER |
| (29) | Vorvakuumpumpe für Mehrstufenvakuumanlage |
| (30) | Katalysatoreinspeisung (Katalysator gelöst in Phenol) |
| (31) | DPC Zudosierung zur Einstellung eines definierten Endgruppenverhältnis im fertigen Polycarbonat |
| (32) | Spalt-Phenol partielle Rezirkulation (Wiederverwertung) für den Katalysatoransatz |

Ein wichtiges Qualitätskriterium für Polycarbonat, insbesondere bei seiner Verwendung für Fensterscheiben oder optischen Vorrichtungen, ist die möglichst vollständige Abwesenheit gelblicher Verfärbungen. Diese gelblichen Verfärbungen beruhen auf dem Auftreten von Nebenreaktionen, die zu gefärbten Verunreinigungen führen.

Im Rahmen der vorliegenden Erfindung wurde überraschend gefunden, dass bei Auswahl bestimmter Materialien für die Teile des Umesterungsreaktors, die mit den Reaktionskomponenten in Berührung kommen, das Auftreten solcher gelber Verfärbungen im Polycarbonatprodukt nahezu vollständig vermieden werden kann.

In einer bevorzugten Ausführungsform besteht die Oberfläche des Umesterungsreaktors, die mit den Reaktionskomponenten in Berührung kommt, daher vorzugsweise aus einem dem folgenden Material:

Alloy 59 (Werkstoffnummer 2.4605).

Um eine optimale Einstellung des gewünschten OH/Arylcarbonat-Endgruppenverhältnisses zu ermöglichen, weist die erfindungsgemäße Anlage vorzugsweise Mittel zum Zudosieren von Diethylcarbonat zu dem Umesterungszwischenprodukt nach Verlassen des Umesterungsreaktors auf. In einer besonders bevorzugten Ausführungsform weist die erfindungsgemäße Vorrichtung Mittel zur Aufteilung des Zwischenproduktstromes nach Verlassen des Umesterungsreaktors auf, wobei dem getrennten Zwischenproduktstrom separat Darylcarbonat zudosiert werden kann. Besonders bevorzugt ist es, dass die erfindungsgemäße Vorrichtung Mittel aufweist, die die Verwendung des durch Destillation über die Kolonne rückgewonnenen Diarylcarbonates aus der Umesterungsreaktion zur Zudosierung von weiterem Diarylcarbonat nach der Umesterungsreaktion erlauben. Auf diese Weise kann das während der Umesterungsreaktion rückgewonnene Diarylcarbonat optimal wiederverwendet werden.

Bei den aus dem Stand der Technik bekannten Anlagen zur Herstellung von Polycarbonat kommt es immer wieder zu langen Maschinenstillstandszeiten, da manuelle Eingriffe in den Verfahrensablauf, insbesondere zum Reinigen von Komponenten der Anlage, erforderlich sind, die ein zeitweiliges Abschalten der Anlage notwendig machen. Ein besonderes Problem in den aus dem Stand der Technik bekannten Anlagen zur Herstellung von Polycarbonat besteht dabei in den Prä-Polykondensationsreaktoren und Polykondensationsreaktoren, bei denen durch die Polykondensationsreaktion abgespaltenes Phenol unter Vakuum abgezogen und anschließend kondensiert wird. Durch mitgerissenes Oligomer kommt es dabei regelmäßig zur Ablagerung des Oligomers in der Kondensationsvorrichtung, was ein manuelles Reinigen des Kondensators notwendig macht, wozu in der Regel ein Abschalten der Anlage erforderlich ist.

Erfindungsgemäß wird dieses Problem dadurch überwunden, dass mindestens ein Prä-Polykondensationsreaktionsreaktor und/oder mindestens ein Polykondensationsreaktor Mittel zum Entfernen des bei der Prä-Polykondensationsreaktion abgespaltenen Hydroxyaryl-Reaktionsproduktes aufweist, die so gestaltet sind, dass das abgetrennte Hydroxyaryl-Reaktionsprodukt sowie mitgerissenes Oligomer aus der Prä-Polykondensationsreaktion separat kondensiert werden. Vorzugsweise handelt es sich bei den angesprochenen Mitteln um einen Doppelkondensator, wie er in der Figur 2 gezeigt wird.

In einer bevorzugten Ausführungsform ist der Polykondensationsreaktior als Ringscheibenreaktor ausgeführt.

Besonders bevorzugt ist es dabei, dass der Polykondensationsreaktor über einen hydraulischen Antrieb verfügt. Dies führt gegenüber den aus dem Stand der Technik bekannten Anlagen zu dem Vorteil, dass nicht zur Wartung des Antriebes in regelmäßigen Abständen abgeschaltet werden muss, was zu Anlagenstillstandszeiten führt.

Vorzugsweise unterscheidet sich die erfindungsgemäße Anlage von den aus dem Stand der Technik bekannten dadurch, dass die Anlage Mittel zum Aufteilen des Polycarbonatreaktionsproduktes aus dem Polykondensationsreaktor in zwei oder mehrere Teilströme erlauben, wobei die Anlage zwei oder mehr Pelletiervorrichtungen zum Pelletieren der zwei oder mehr Teilströme des Polycarbonatreaktionsproduktes aufweist.

Ein weiterer Nachteil der aus dem Stand der Technik bekannten Anlagen zur Herstellung von Polycarbonaten besteht darin, dass es innerhalb der gesamten Anlage immer wieder zu Ablagerungen von beispielsweise Oligomeren kommt, die zu Verstopfungen der Anlage führen, die oftmals ein Abschalten der Anlage und manuelles Reinigen der verstopften Elemente erforderlich machen. Erfindungsgemäß wird dieses Problem dadurch gelöst, dass als zusätzliches Wärmeüberträgermedium für die Temperaturkonditionierung von Rohstoffschmelzen als auch Hydroxyaryl-Reaktionsprodukten ein speziell gewähltes Alkyl-Aromat verwendet wird, das eine gute Fließfähigkeit und Wärmeübertragungsfähigkeit im Temperaturbereich 50 - 120°C hat.

In einer besonders bevorzugten Ausführungsform wird als zusätzliches Wärmeüberträgermedium ein $C_{10}$-$C_{13}$-Alkyl-Aromat verwendet. Ein besonders bevorzugtes Wärmeüberträgermedium ist Therminol ADX-10 (Soltia UK Limited), das einen Siedepunkt von 293°C aufweist, oder ein vergleichbares Wärmeüberträgermedium. Durch die Verwendung dieses Wärmeträgers ist es möglich, die Anlage ohne Überdruck auf den Temperaturen zu heizen, bei denen die genannten Oligomere schmelzen, so dass eine Beseitigung der Verstopfungen ohne manuelle Eingriffe möglich wird. Dies führt zu einer Verminderung von Anlagenstillstandszeiten und der Vermeidung einer Gefährdung des Anlagenpersonals durch toxische und/oder ätzende Produkte, insbesondere durch Phenol.

Die hergestellte Polycarbonate werden zur Herstellung von Fensterscheiben, Flaschen, Komponenten für Automobilscheinwerfer, Brillengläsern, Linsen, Einwegspritzen, Helmen und Visieren für Helme, Sportbrillen und Sonnenbrillen, KFZ-Zubehör, Solarmodulen, Gehäuse für Computer und Datenspeicherungsvorrichtungen wie CDs und DVDs verwendet.

## Patentansprüche

1. Verfahren zur Herstellung eines Polycarbonats, umfassend wenigstens folgende Schritte:

   a) Umesterung eines oder mehrerer Bisphenole mit einem oder mehreren Diarylcarbonaten in drei Umesterungsreaktoren unter kontinuierlichem Entfernen des freigesetzten Hydroxy-Aryl-Reaktionsproduktes,
   b) Prä-Polykondensation des Reaktionsproduktes der Umesterung in zwei Prä-Polykondensationsreaktoren unter kontinuierlichem Entfernen des freigesetzten Hydroxy-Aryl-Reaktionsproduktes,
   c) Polykondensation des Reaktionsproduktes der Prä-Polykondensation in einem Polykondensationsreaktor,

   wobei das Entfernen des Hydroxy-Aryl-Reaktionsproduktes während der Umesterungsreaktion und das Entfernen des Hydroxy-Aryl-Reaktionsproduktes während der Prä-Polykondensationsreaktion über eine gemeinsame Kolonne erfolgt, wobei mitgerissenes Diarylcarbonat vom abgezogenen Hydroxyaryl-Reaktionsprodukt abgetrennt wird, wobei drei Umesterungsreaktoren (Umesterungsreaktoren I bis III), zwei Prä-Polykondensationsreaktoren (Prä-Polykondensationsreaktoren I und II) und ein Polykondensationsreaktor (Finisher) eingesetzt werden.

2. Verfahren nach Anspruch 1,
   **dadurch gekennzeichnet, dass**
   als Bisphenol Dihydroxydiarylalkane der Formel HO-Z-OH verwendet werden, wobei Z ein divalenter organischer Rest mit 6 bis 30 Kohlenstoffatomen ist, der eine oder mehrere aromatische Gruppen enthält.

3. Verfahren nach Anspruch 1 oder 2,
   **dadurch gekennzeichnet, dass**
   als Diarylcarbonat Di-($C_6$ bis $C_{14}$-Aryl)-Kohlensäureester verwendet werden.

4. Verfahren nach mindestens einem der vorhergehenden Ansprüche,
   **dadurch gekennzeichnet, dass**
   als Bisphenol Bisphenol A und als Diarylcarbonat Diphenylcarbonat verwendet werden.

5. Verfahren nach mindestens einem der vorhergehenden Ansprüche,
   **dadurch gekennzeichnet, dass**

der Umesterungsreaktion in Schritt a) ein Katalysator in Form einer Mischung aus mindestens einem Alkalimetallsalz eines aromatischen Alkohols und mindestens einem Borsäureester eines aromatischen Alkohols zugesetzt wird.

**6.** Verfahren gemäß Anspruch 5,
**dadurch gekennzeichnet, dass**
ein Katalysator in Form einer Mischung aus Alkalimetallphenolat und Borsäureester eines aromatischen Alkohols zugesetzt wird.

**7.** Verfahren gemäß Anspruch 6,
**dadurch gekennzeichnet, dass** als Katalysator eine Mischung aus

0.1 bis 2 ppm Alkalimetallphenolat und
0.25 bis 3ppm Borsäureester eines aromatischen Alkohols zugesetzt werden.

**8.** Verfahren nach mindestens einem der vorhergehenden Ansprüche,
**dadurch gekennzeichnet, dass**
den Zwischenproduktströmen zwischen der Umesterungsreaktion und der Prä-Polykondensationsreaktion zum Einstellen des OH/Arylcarbonat-Endgruppenverhältnis Diarylcarbonat zugesetzt wird.

**9.** Verfahren nach mindestens einem der vorhergehenden Ansprüche,
**dadurch gekennzeichnet, dass**
die Zwischenproduktströme nach der Umesterungsreaktion geteilt werden, wobei mindestens einer der geteilten Zwischenproduktströme vor der Prä-Polykondensationsreaktion separat Diarylcarbonat zugesetzt wird, um in den geteilten Zwischenproduktströmen unterschiedliche OH/Arylcarbonat-Endgruppenverhältnisse einzustellen.

**10.** Anlage zur Herstellung eines Polycarbonates, umfassend:

a) drei Umesterungsreaktoren zur Aufnahme einer Reaktionsmischung, die mindestens ein Bisphenol und mindestens ein Diarylcarbonat umfasst, und zur Herstellung eines umgeesterten Zwischenproduktes,
b) zwei Prä-Polykondensationsreaktoren zur Herstellung eines Prä-Polykondensations-Zwischenproduktes aus dem umgeesterten Zwischenprodukt,
c) einen Polykondensationsreaktor (Finisher) zur Herstellung eines Polycarbonates aus dem Prä-Polykondensationszwischenprodukt,

wobei die Umesterungsreaktoren Mittel zum Entfernen des bei der Umesterungsreaktion abgespaltenen Hydroxyaryl-Reaktionsproduktes aufweist, die mindestens eine Kolonne umfassen, wobei die Anlage drei Umesterungsreaktoren (Umesterungsreaktoren I bis III), zwei Prä-Polykondensationsreaktoren (Prä-Polykondensationsreaktoren I und II) und einen Polykondensationsreaktor (Finisher) umfasst.

**11.** Anlage nach Anspruch 10,
**dadurch gekennzeichnet, dass**
die Oberfläche der Umesterungsreaktoren, die mit den Reaktionskomponenten in Berührung kommen, aus dem folgenden Material bestehen: Alloy 59 (Werkstoffnummer 2.4605).

**12.** Anlage nach Anspruch 10 oder 11,
**dadurch gekennzeichnet, dass**
die Anlage zwei hintereinandergeschaltete Präpolykondensationsreaktionsstufen aufweist sowie Mittel zum Zudosieren von Diarylcarbonat zu dem umgeesterten und präpolykondensierten Zwischenprodukt nach Verlassens des ersten Präpolykondensationsreaktors aufweist.

**13.** Anlage nach Anspruch 12,
**dadurch gekennzeichnet, dass**
die Anlage Mittel aufweist, die ein Aufteilen des umgeesterten und präpolykondensierten Zwischenproduktes aus dem ersten Präpolykondensationsreaktors in zwei oder mehrere parallele Teilströme erlauben, sowie Mittel aufweist, die ein separates Zudosieren von Diarylcarbonat zu den zwei oder mehreren parallelen Teilströmen erlauben.

**14.** Anlage gemäß Anspruch 12 oder 13,
**dadurch gekennzeichnet, dass**

die Anlage Mittel aufweist, die die Verwendung des aus den Umesterungsreaktoren und den Präpolykondensationsreaktoren rückgewonnenen Diarylcarbonates zur Zudosierung von Diarylcarbonat zu dem umgeesterten Zwischenprodukt erlauben.

**15.** Anlage nach mindestens einem der Ansprüche 10 bis 14,
**dadurch gekennzeichnet, dass**
mindestens ein Prä-Polykondensationsreaktionsreaktor und/oder
mindestens ein Polykondensationsreaktor Mittel zum Entfernen des bei der Polykondensationsreaktion abgespaltenen Hydroxyaryl-Reaktionsproduktes aufweist, die so gestaltet sind, dass das abgetrennte Hydroxyaryl-Reaktionsprodukt sowie mitgerissenes Oligomer aus der Prä-Polykondensationsreaktion separat kondensiert werden

**16.** Anlage nach mindestens einem der Ansprüche 10 bis 15,
**dadurch gekennzeichnet, dass**
die Polykondensationsreaktoren als Ringscheibenreaktor ausgeführt sind.

**17.** Anlage nach mindestens einem der Ansprüche 10 bis 16,
**dadurch gekennzeichnet, dass**
die Polykondensationsreaktoren unter Verwendung einer Hydraulikflüssigkeit hydraulisch angetrieben werden.

**18.** Anlage nach mindestens einem der Ansprüche 10 bis 17,
**dadurch gekennzeichnet, dass**
die Anlage Mittel aufweist, die ein Aufteilen des Polycarbonatstromes aus dem Polykondensationsreaktor in zwei oder mehrere Teilströme erlauben, wobei die Anlage zwei oder mehr Pelletiervorrichtungen zum Pelletieren der zwei oder mehr Teilströme des Polycarbonatreaktionsproduktes aufweist.

**19.** Anlage gemäß einem der Ansprüche 10 bis 18,
**dadurch gekennzeichnet, dass**
als zusätzliches Wärmeüberträgermedium für die Temperaturkonditionierung von Rohstoffschmelzen und/oder Hydroxyaryl-Reaktionsprodukten ein speziell gewählter Alkyl-Aromat verwendet wird, der eine gute Fließfähigkeit und Wärmeübertragungsfähigkeit im Temperaturbereich 50 - 120°C hat.

## Claims

**1.** Method for producing a polycarbonate, comprising at least the following steps:

a) transesterifying one or more bisphenols with one or more diaryl carbonates in three transesterification reactors, with continuous removal of the hydroxyaryl reaction product that is released,
b) pre-polycondensing the reaction product of the transesterification in two pre-polycondensation reactors, with continuous removal of the hydroxyaryl reaction product that is released,
c) polycondensing the reaction product of the pre-polycondensation in one polycondensation reactor,

wherein the removal of the hydroxyaryl reaction product during the transesterification reaction and the removal of the hydroxyaryl reaction product during the pre-polycondensation reaction takes place via a common column, wherein entrained diaryl carbonate is separated from the hydroxyaryl reaction product that is drawn off, wherein three transesterification reactors (transesterification reactors I to III), two pre-polycondensation reactors (pre-polycondensation reactors I and II) and one polycondensation reactor (finisher) are used.

**2.** Method according to claim 1, **characterized in that** dihydroxydiarylalkanes of formula HO-Z-OH are used as the bisphenol, wherein Z is a divalent organic radical having 6 to 30 carbon atoms which contains one or more aromatic groups.

**3.** Method according to claim 1 or 2, **characterized in that** di-($C_6$ to $C_{14}$-aryl) -carbonic acid esters are used as the diaryl carbonate.

**4.** Method according to at least one of the preceding claims, **characterized in that** bisphenol A is used as the bisphenol and diphenyl carbonate is used as the diaryl carbonate.

5. Method according to at least one of the preceding claims, **characterized in that** a catalyst in the form of a mixture of at least one alkali metal salt of an aromatic alcohol and at least one boric acid ester of an aromatic alcohol is added to the transesterification reaction in step a).

6. Method according to claim 5, **characterized in that** a catalyst in the form of a mixture of alkali metal phenolate and boric acid ester of an aromatic alcohol is added.

7. Method according to claim 6, **characterized in that** a mixture of

   0.1 to 2 ppm alkali metal phenolate and
   0.25 to 3 ppm boric acid ester of an aromatic alcohol is added as catalyst.

8. Method according to at least one of the preceding claims, **characterized in that** diaryl carbonate is added to the intermediate product streams between the transesterification reaction and the pre-polycondensation reaction in order to set the OH/aryl carbonate terminal group ratio.

9. Method according to at least one of the preceding claims, **characterized in that** the intermediate product streams are split after the transesterification reaction, wherein diaryl carbonate is added separately to at least one of the split intermediate product streams prior to the pre-polycondensation reaction in order to set different OH/aryl carbonate terminal group ratios in the split intermediate product streams.

10. Plant for producing a polycarbonate, comprising:

   a) three transesterification reactors for receiving a reaction mixture which comprises at least one bisphenol and at least one diaryl carbonate and for producing a transesterified intermediate product,
   b) two pre-polycondensation reactors for producing a pre-polycondensation intermediate product from the transesterified intermediate product,
   c) one polycondensation reactor (finisher) for producing a polycarbonate from the pre-polycondensation intermediate product,

   wherein the transesterification reactors have means for removing the hydroxyaryl reaction product that is cleaved during the transesterification reaction, said means comprising at least one column, the plant comprising three transesterification reactors (transesterification reactors I to III), two pre-polycondensation reactors (pre-polycondensation reactors I and II) and one polycondensation reactor (finisher).

11. Plant according to claim 10, **characterized in that** the surfaces of the transesterification reactors which come into contact with the reaction components are made of the following material: alloy 59 (material number 2.4605).

12. Plant according to claim 10 or 11, **characterized in that** the plant has two pre-polycondensation reaction stages connected in series, as well as means for metering diaryl carbonate into the transesterified and pre-polycondensed intermediate product after the latter leaves the first pre-polycondensation reactor.

13. Plant according to claim 12, **characterized in that** the plant has means which make it possible to split the transesterified and pre-polycondensed intermediate product from the first pre-polycondensation reactor into two or more parallel sub-streams, as well as means which enable separate metering of diaryl carbonate into the two or more parallel sub-streams.

14. Plant according to claim 12 or 13, **characterized in that** the plant has means which make it possible to use the diaryl carbonate recovered from the transesterification reactors and the pre-polycondensation reactor for metering diaryl carbonate into the transesterified intermediate product.

15. Plant according to at least one of claims 10 to 14, **characterized in that** at least one pre-polycondensation reactor and/or at least one polycondensation reactor has means for removing the hydroxyaryl reaction product that is cleaved during the polycondensation reaction, said means being configured in such a way that the separated hydroxyaryl reaction product and entrained oligomer from the pre-polycondensation reaction are condensed separately.

16. Plant according to at least one of claims 10 to 15, **characterized in that** the polycondensation reactors are designed as a disc ring reactor.

17. Plant according to at least one of claims 10 to 16, **characterized in that** the polycondensation reactors are driven hydraulically using a hydraulic fluid.

18. Plant according to at least one of claims 10 to 17, **characterized in that** the plant has means which make it possible to split the polycarbonate stream from the polycondensation reactor into two or more sub-streams, wherein the plant has two or more pelleting devices for pelleting the two or more sub-streams of the polycarbonate reaction product.

19. Plant according to one of claims 10 to 18, **characterized in that** a specially selected alkyl aromatic compound which has good flowability and heat transfer capability in the temperature range 50-120°C is used as an additional heat transfer medium for the temperature conditioning of raw material melts and/or hydroxyaryl reaction products.

## Revendications

1. Procédé de fabrication d'un polycarbonate, comprenant au moins les étapes suivantes :

   a) transestérification d'un ou plusieurs bisphénols avec un ou plusieurs carbonates de diaryle dans trois réacteurs de transestérification avec élimination continue du produit de réaction hydroxyaryle libéré,
   b) prépolycondensation du produit de réaction de la transestérification dans deux réacteurs de prépolycondensation avec élimination continue du produit de réaction hydroxyaryle libéré,
   c) polycondensation du produit de réaction de la prépolycondensation dans un réacteur de polycondensation,

   l'élimination du produit de réaction hydroxyaryle pendant la réaction de transestérification et l'élimination du produit de réaction hydroxyaryle pendant la réaction de prépolycondensation étant effectuées au moyen d'une colonne commune, le carbonate de diaryle entraîné étant séparé du produit de réaction hydroxyaryle extrait, trois réacteurs de transestérification (réacteurs de transestérification I à III), deux réacteurs de prépolycondensation (réacteurs de prépolycondensation I et II) et un réacteur de polycondensation (finisher) étant utilisés.

2. Procédé selon la revendication 1, **caractérisé en ce que** l'on utilise comme bisphénol des dihydroxydiarylalcanes de formule HO-Z-OH, Z étant un résidu organique divalent ayant 6 à 30 atomes de carbone qui contient un ou plusieurs groupes aromatiques.

3. Procédé selon la revendication 1 ou 2, **caractérisé en ce que** l'on utilise comme carbonate de diaryle un ester d'acide carbonique di(arylique en $C_6$ à $C_{14}$).

4. Procédé selon au moins l'une des revendications précédentes, **caractérisé en ce que** l'on utilise comme bisphénol du bisphénol A et comme carbonate de diaryle du carbonate de diphényle.

5. Procédé selon au moins l'une des revendications précédentes, **caractérisé en ce qu'**un catalyseur sous la forme d'un mélange d'au moins un sel de métal alcalin d'un alcool aromatique et d'au moins un ester d'acide borique d'un alcool aromatique est ajouté à la réaction de transestérification à l'étape a).

6. Procédé selon la revendication 5, **caractérisé en ce qu'**un catalyseur sous la forme d'un mélange d'un phénolate de métal alcalin et d'un ester d'acide borique d'un alcool aromatique est ajouté.

7. Procédé selon la revendication 6, **caractérisé en ce qu'**un mélange de 0,1 à 2 ppm d'un phénolate de métal alcalin et de 0,25 à 3 ppm d'un ester d'acide borique d'un alcool aromatique est ajouté comme catalyseur.

8. Procédé selon au moins l'une des revendications précédentes, **caractérisé en ce que** du carbonate de diaryle est ajouté aux courants de produit intermédiaire entre la réaction de transestérification et la réaction de prépolycondensation pour régler le rapport de groupes terminaux OH/carbonate d'aryle.

9. Procédé selon au moins l'une des revendications précédentes, **caractérisé en ce que** les courants de produit intermédiaire sont divisés après la réaction de transestérification, du carbonate de diaryle étant ajouté séparément à au moins un des courants de produit intermédiaire divisés avant la réaction de prépolycondensation pour régler des rapports de groupes terminaux OH/carbonate d'aryle différents dans les courants de produit intermédiaire divisés.

**10.** Installation de fabrication d'un polycarbonate, comprenant :

a) trois réacteurs de transestérification pour recevoir un mélange de réaction qui comprend au moins un bisphénol et au moins un carbonate de diaryle, et pour fabriquer un produit intermédiaire transestérifié,
b) deux réacteurs de prépolycondensation pour fabriquer un produit intermédiaire de prépolycondensation à partir du produit intermédiaire transestérifié,
c) un réacteur de polycondensation (finisher) pour fabriquer un polycarbonate à partir du produit intermédiaire prépolycondensé,

les réacteurs de transestérification présentant des moyens pour éliminer le produit de réaction hydroxyaryle libéré lors de la réaction de transestérification, lesquels comprennent au moins une colonne, l'installation comprenant trois réacteurs de transestérification (réacteurs de transestérification I à III), deux réacteurs de prépolycondensation (réacteurs de prépolycondensation I et II) et un réacteur de polycondensation (finisher).

**11.** Installation selon la revendication 10, **caractérisée en ce que** la surface des réacteurs de transestérification qui entre en contact avec les composants de réaction se compose du matériau suivant : Alloy 59 (numéro de matériau 2.4605).

**12.** Installation selon la revendication 10 ou 11, **caractérisée en ce que** l'installation présente deux étages de réaction de prépolycondensation montés l'un derrière l'autre ainsi que des moyens pour ajouter de façon dosée du carbonate de diaryle au produit intermédiaire transestérifié et prépolycondensé après la sortie du premier réacteur de prépolycondensation.

**13.** Installation selon la revendication 12, **caractérisée en ce que** l'installation présente des moyens qui permettent une division du produit intermédiaire transestérifié et prépolycondensé sortant du premier réacteur de prépolycondensation en deux ou plusieurs courants partiels parallèles ainsi que des moyens qui permettent un ajout dosé séparé de carbonate de diaryle aux deux ou plusieurs courants partiels parallèles.

**14.** Installation selon la revendication 12 ou 13, **caractérisée en ce que** l'installation présente des moyens qui permettent l'utilisation du carbonate de diaryle récupéré des réacteurs de transestérification et des réacteurs de prépolycondensation pour l'ajout dosé de carbonate de diaryle au produit intermédiaire transestérifié.

**15.** Installation selon au moins l'une des revendications 10 à 14, **caractérisée en ce qu'**au moins un réacteur de réaction de prépolycondensation et/ou au moins un réacteur de polycondensation présente des moyens pour éliminer le produit de réaction hydroxyaryle libéré lors de la réaction de polycondensation, lesquels sont conçus de sorte que le produit de réaction hydroxyaryle séparé ainsi que l'oligomère entraîné issu de la réaction de prépolycondensation soient condensés séparément.

**16.** Installation selon au moins l'une des revendications 10 à 15, **caractérisée en ce que** les réacteurs de polycondensation sont réalisés sous la forme de réacteurs à disques annulaires.

**17.** Installation selon au moins l'une des revendications 10 à 16, **caractérisée en ce que** les réacteurs de polycondensation sont entraînés hydrauliquement au moyen d'un liquide hydraulique.

**18.** Installation selon au moins l'une des revendications 10 à 17, **caractérisée en ce que** l'installation présente des moyens qui permettent une division du courant de polycarbonate issu du réacteur de polycondensation en deux ou plusieurs courants partiels, l'installation présentant deux ou plusieurs dispositifs de granulation pour transformer en granulés les deux ou plusieurs courants partiels du produit de réaction polycarbonate.

**19.** Installation selon l'une des revendications 10 à 18, **caractérisée en ce que** l'on utilise comme milieu transmetteur de chaleur supplémentaire pour le conditionnement en température de matières premières fondues et/ou de produits de réaction hydroxyaryles un aromate d'alkyle spécialement choisi qui possède une bonne fluidité et une bonne capacité de transmission de chaleur dans la plage de température de 50 à 120 °C.

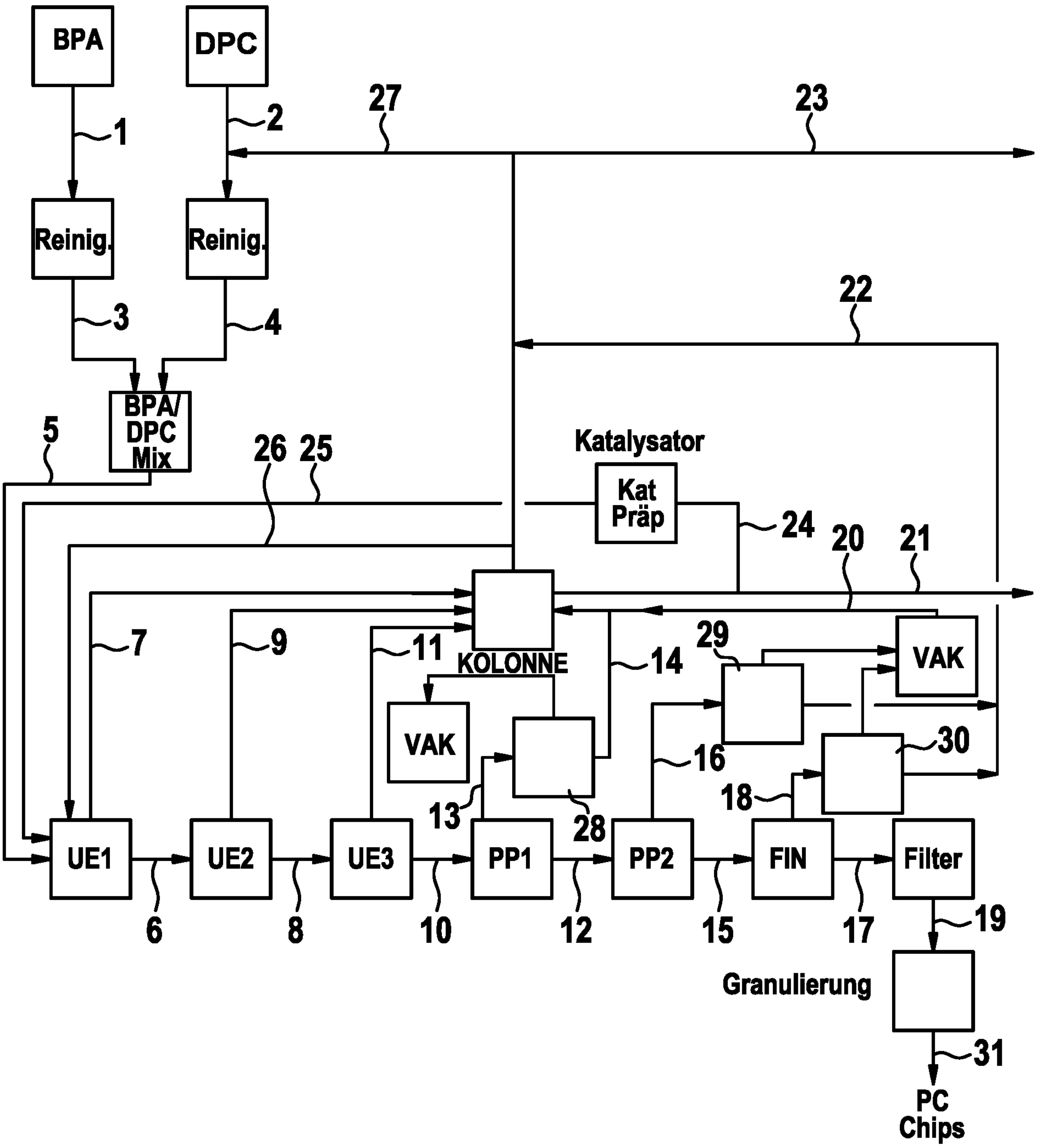
BPA
DPC
1
2
27
23
Reinig.
Reinig.
3
4
22
BPA/
DPC
Mix
5
26
25
Katalysator
Kat
Präp
24
20
21
7
9
11
KOLONNE
14
29
VAK
VAK
16
30
13
28
18
UE1
UE2
UE3
PP1
PP2
FIN
Filter
6
8
10
12
15
17
19
Granulierung
31
PC
Chips

Fig. 1

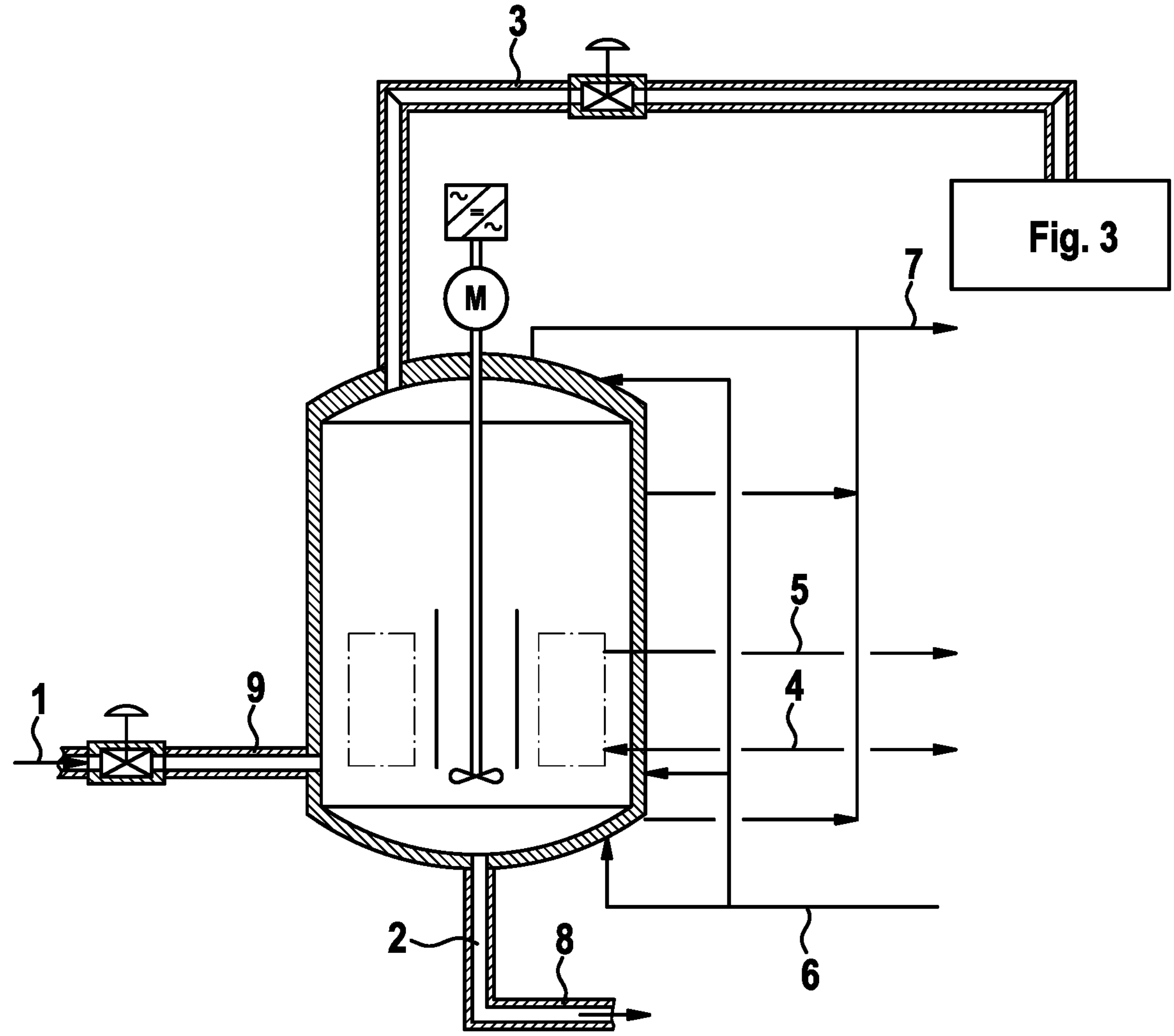


Fig. 2

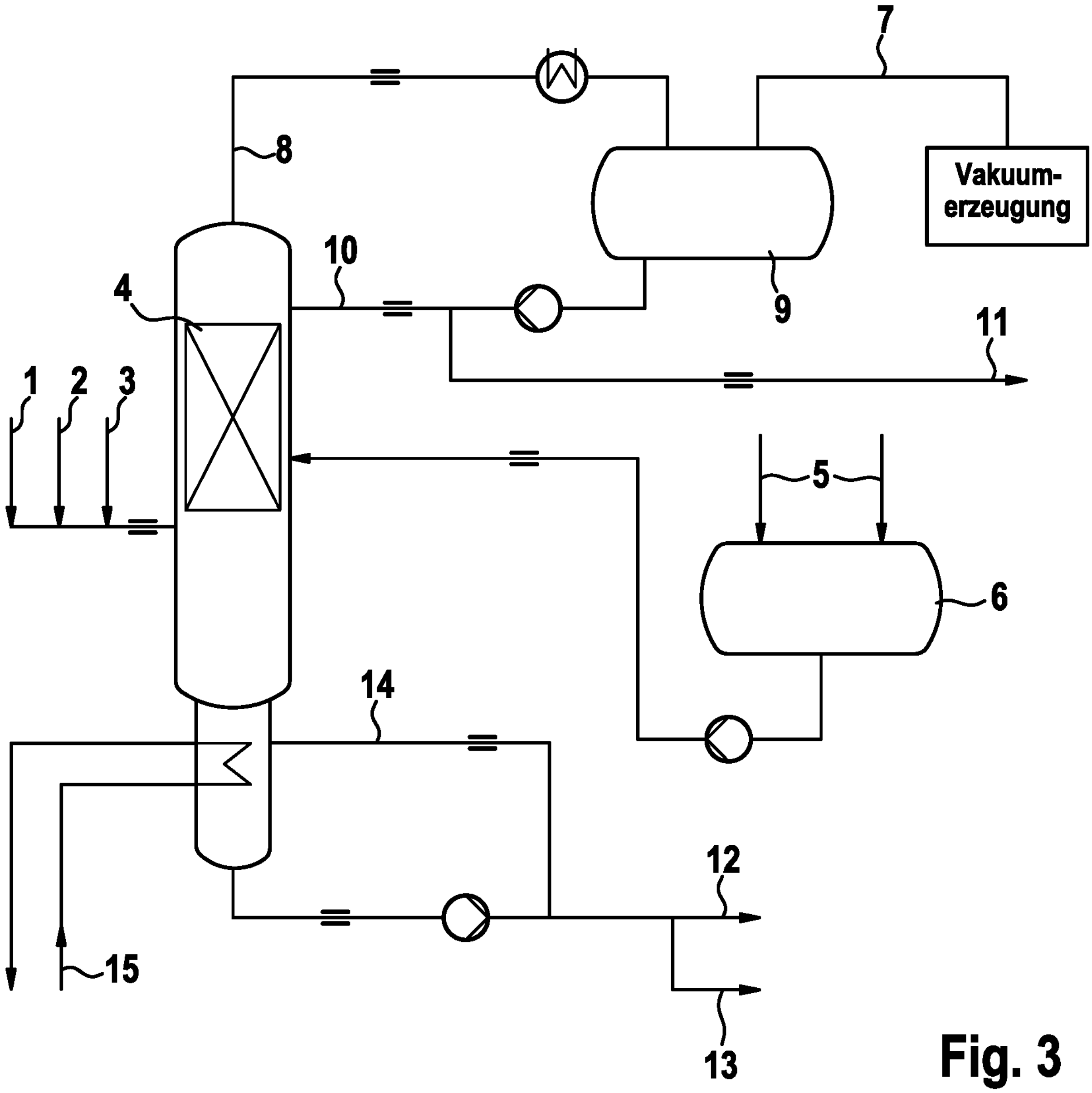


Fig. 3

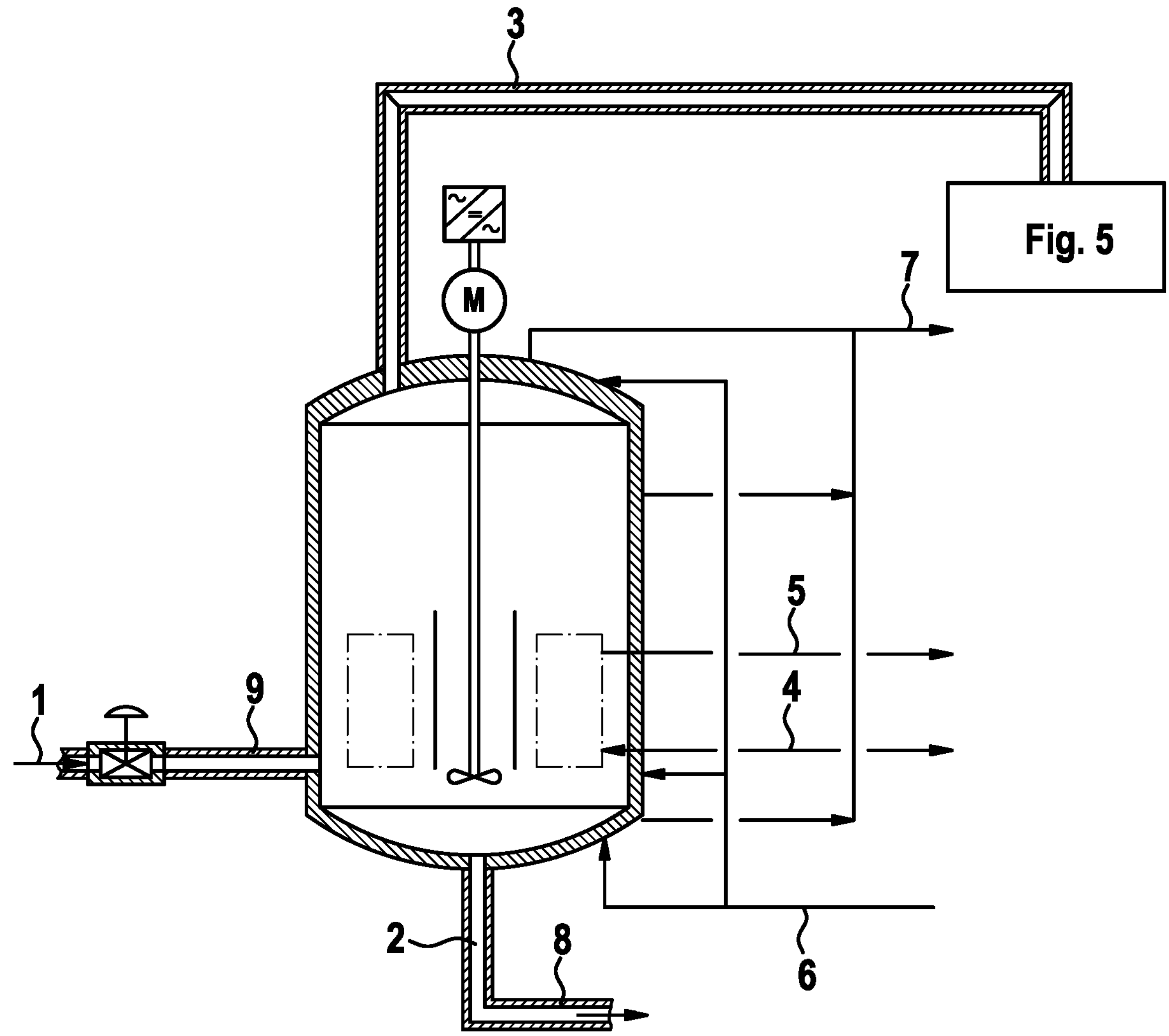


Fig. 4

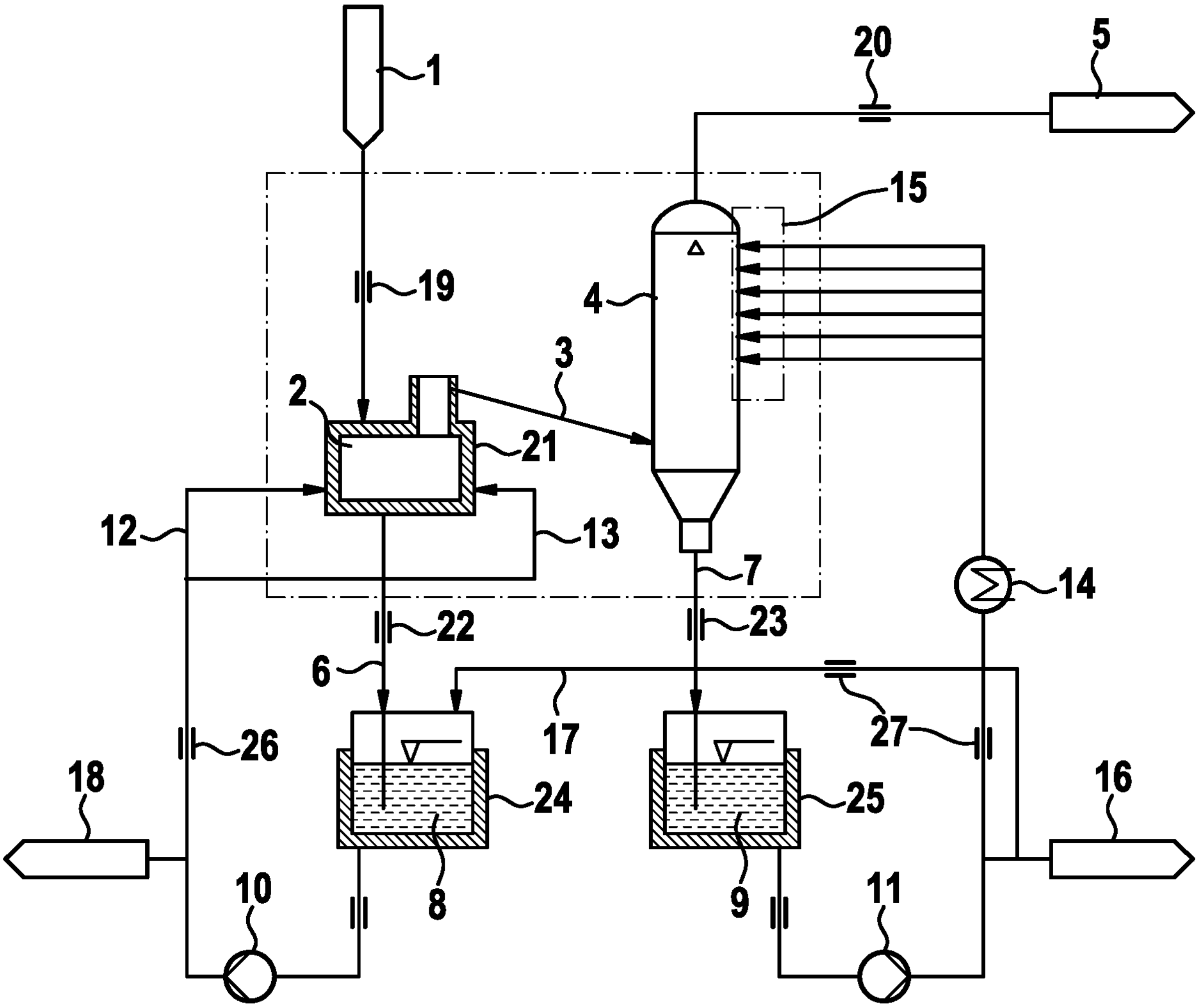


Fig. 5

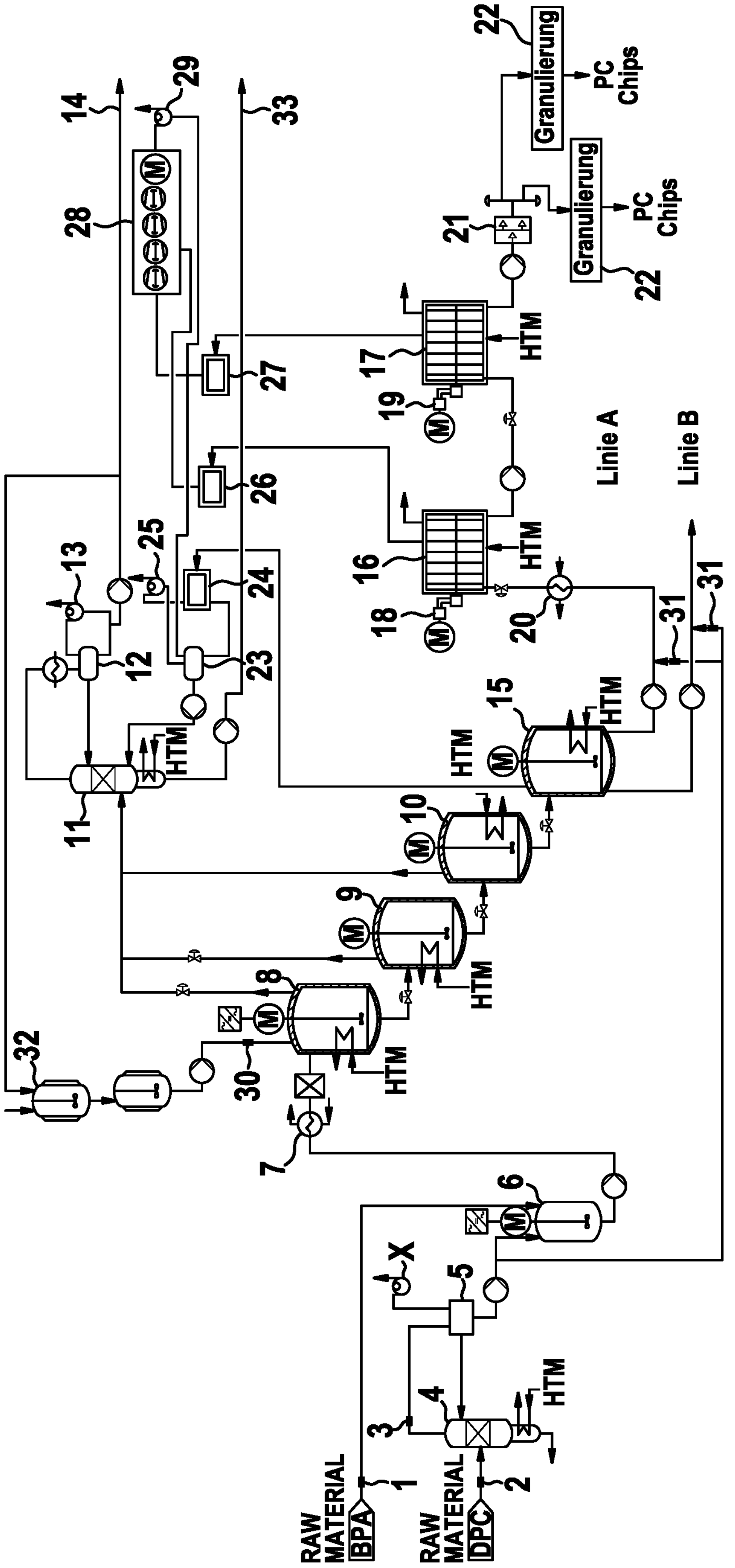
RAW MATERIAL BPA
RAW MATERIAL DPC
HTM
X
Granulierung
PC Chips
Linie A
Linie B
1
2
3
4
5
6
7
8
9
10
11
12
13
14
15
16
17
18
19
20
21
22
23
24
25
26
27
28
29
30
31
32
33

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- Chemistry and Physics of Polycarbonats, Polymer Reviews. **D.C. PREVORSEK ; B.T. DEBONA ; Y. KERSTEN.** Schnell. Interscience Publishers, 1964, vol. 9
- Synthesis of Poly(ester)carbonate Copolymers. Journal of Polymer Science
- Polymer Chemistry. 1980, vol. 19, 75-90
- Polycarbonates. **D. FREITAG ; U. GRIGO ; P.R. MÜLLER ; N. NOUVERTNE ; BAYER AG.** Encyclopedia of Polymere Science and Engineering. 1988, vol. 11, 648-718
- **U. GRIGO ; K. KIRCHER ; P.R. MÜLLER.** Polycarbonate. *Becker/Braun, Kunststoff-Handbuch, Band,* vol. 3/1
- Polycarbonate, Polyacetale, Polyester, Celluloseester. Carl Hanser Verlag München, 1992, 117-299